# EUROPEAN PATENT APPLICATION

(11) **EP 3 965 032 A1**
(43) Date of publication of application: **09.03.2022**
(21) Application number: 20194330.5
(22) Date of filing: 03.09.2020
(51) Int. Cl.: G06Q 10/06, G06Q 10/10, G06F 40/00

(54) **PREDICTING SUCCESS FOR A SALES CONVERSATION**

(71) Applicant: Lifeline Systems Company, Framingham, MA 01702-8171 (US)
(72) Inventor: GIL PONCE, Enrique Antonio, 5656 AE Eindhoven (NL)
(74) Representative: Haseltine Lake Kempner LLP

(57) **Abstract**

A mechanism for generating a success indicator of a sales conversation based on notes taken by a sales representative during the sales conversation. The notes, written by the sales representative during the sales conversation, are processed using a predictive algorithm to generate the success indicator.

## Description

### FIELD OF THE INVENTION

The present invention relates to the field of sales calls or conversations, and in particular to the field of determining a likely success of a sales conversation.

### BACKGROUND OF THE INVENTION

Sales representative often engage in calls/conversations with potential clients/customers/subscribers in an effort to gain new custom, also known as cold calling. Similarly, sales representatives can also participate in inbound calls from subscribers expressing a desire to cancel their subscription. It is also somewhat common for sales representatives to call (or receive calls from) existing clients/customers with a view to changing (e.g. upgrading) or modifying a service/product provided to the client/customer.

In these cases, one of the sales representative's goals is to ensure that the individual on the other side of the line becomes or remains a client/customer, or to increase a level of service/product provided to the client/customer. The effectiveness of these conversations is largely dependent on the representative's skills and ability to pick out topics from the conversation that can persuade the (potential) client/customer.

There is an ongoing and growing interest in monitoring the interaction between sales representatives and potential/existing clients or customers. In particular, there is a growing interest in making sales conversations more efficient and effective, to reduce time spent in sales conversations by both representatives and potential/existing clients or customers.

### SUMMARY OF THE INVENTION

The invention is defined by the claims.

According to examples in accordance with an aspect of the invention, there is provided a computer-implemented method for generating a success indicator representing a prediction that the outcome of a sales conversation, between a sales representative and a current/potential client, is a desired outcome.

The computer-implemented method comprises: obtaining textual data, the textual data comprising notes taken by a sales representative during a sales conversation; and processing the obtained textual data using a predictive algorithm to generate the success indicator.

The present disclosure recognizes that an indicator of success of a sales conversation (e.g. a sales call) can be generated using (written or typed) notes taken by a sales representative during the sales conversation. In other words, the likely outcome of the sales conversation can be predicted during the course of the sales conversation by analyzing the (written or typed) notes taken by the sales representative.

In particular, the present invention recognizes that information contained in notes taken by a sales representative reflects the successful or unsuccessful progress of a sales conversation towards a (sales representative) desired outcome, such as a sale, retention of client or upgrade. For instance, a failure to gather information of the current/potential client may indicate that the desired outcome will not be reached. On the contrary, notes that indicate that the client is indicating a desire to proceed may indicate that the desired outcome is more likely to be reached.

This indicator of success allows the sales representative to choose where to focus his/her efforts, end a call/conversation sooner if the predicted success rate is low, decide whether a different sales approach would be beneficial and/or determine when a follow-up call/conversation may be necessary.

Use of notes of the sales representative avoids the need for complex speech recognition algorithms, e.g. to analyze the speech of the representative/client, as well as avoiding the need for alternative approaches for indicating success (e.g. the sales representative ticking off checkpoints towards a goal). Notes also allow for inferences of the sales representative (e.g. inferences of emotion, background noise and so on), which can be indicated in the notes, to be taken into account when generating the success indicator.

Moreover, the present disclosure allows conventional techniques used by sales people (note-taking) to be exploited to generate the success indicator. This provides a non-intrusive mechanism for generating the success indicator.

Preferably, the computer-implemented method is performed during the course of the sales conversation (i.e. as the sales conversation is ongoing). This facilitates provision of feedback of the likely outcome of the sales conversation during the sales conversation itself. Although particularly advantageous in the context of sales calls (e.g. at a call center), due to the volume and frequency of calls in such scenarios. It is not essential that the sales conversation be a sales call. Rather, the sales conversation may be a face-to-face conversation during which the sales representative makes notes.

The success indicator may comprise a predicted probability that the outcome of the sales conversation is the desired outcome. The predicted probability is a numeric indicator of the likelihood that the outcome will be the desired outcome, e.g. on a scale of 0 to 1, 0 to 10, 1 to 10, 0 to 100 or 1 to 100. Other suitable scales will be apparent to the skilled person.

In some examples, the step of processing the obtained textual data comprises: processing the obtained textual data using a natural language processing algorithm; and processing the output of the natural language processing algorithm using a machine-learning algorithm to generate the success indicator.

A machine-learning algorithm can thereby use features of the textual data identified by the natural language processing algorithm to generate the success indicator. In other words, the output of the natural language processing algorithm may comprise one or more features for input to the machine-learning algorithm.

The step of processing the obtained textual data using a natural language processing algorithm may comprise: using the natural language processing algorithm to identify any responses of the client to one or more questions asked by the sales representative; and outputting data responsive to any identified recorded responses.

The present disclosure recognizes that the responses of a client to questions posed by the sales representative are particularly indicative of a likely outcome of the sales conversation. This is because positive responses to questions indicate that the sales tactic/approach used by the sales representative is working successfully (e.g. leading to a particular outcome), whereas negative responses indicate that the sales tactic/approach used by the sales representative is not working successfully (i.e. not leading to the particular outcome).

The computer-implemented method may further comprise displaying, at a user interface, a visual representation of the success indicator. Displaying the success indicator (to the sales representative) facilitates ease of understanding of the predicted outcome of the sales conversation. However, other approaches could be used (e.g. providing audible or haptic feedback to a user).

The computer-implemented method may further comprise: receiving an input, from the sales representative, indicating an actual outcome of the sales conversation; and modifying the predictive algorithm based on the actual outcome of the sales conversation and the textual data of the sales conversation.

Thus, the true or actual outcome of the call can be used to improve the predictive algorithm, so that subsequent analysis performed with the predictive algorithm can be made more accurate.

In some examples, the actual outcome of the call may stored (e.g. along with an identifier of the potential/current client) for future reference.

Optionally, the step of modifying the predictive algorithm comprises retraining the predictive algorithm using the actual outcome of the sales conversation and the textual data of the sales conversation.

In some examples, the textual data is obtained from an input interface configured to receive textual input from the sales representative.

Preferably, the computer-implemented method is iteratively repeated to thereby generate and update the success indicator. Thus, the success indicator may be updated throughout the progress of a sales conversation (e.g. as more notes are added or parts of the notes are removed).

Optionally, the textual data comprises any identifying information of the client noted by the sales representative during the sales conversation. Gathering of identifying information of the client may indicate that the sales is progressing towards a particular outcome (e.g. as identifying information is more likely to be given if it is likely that a sale will be made).

Some embodiments may identify a context or semantic meaning of the identifying information to determine a likelihood of a sale. For example, a location of a (potential/current) client may reflect a likelihood that a sale will be made, or a name of a company may reflect a likelihood that a sale will be made (e.g. as companies may be more likely to buy than individuals).

The desired outcome may be, for a potential or current client, a sale of a product or service to the potential or current client. The desired outcome may be, for a current client, the retention of the client as a customer for the sales representative.

There is also proposed a computer program product comprising computer program code means which, when executed on a computing device having a processing system, cause the processing system to perform all of the steps of any herein disclosed method.

There is also proposed a processing system for generating a success indicator representing a prediction that the outcome of a sales conversation, between a sales representative and a current/potential client, is a desired outcome.

The processing system is configured to: obtain, at an input interface, textual data, the textual data comprising notes taken by a sales representative during the sales conversation; and process the obtained textual data using a predictive algorithm to generate the success indicator.

There is also proposed a user interface system comprising: the processing system; and a user interface configured to display a visual representation of the success indicator.

The present disclosure also proposes a computer program (product) comprising instructions which, when the program is executed by a computer or processing system, cause the computer or processing system to carry out (the steps of) any herein described method. The computer program (product) may be stored on a non-transitory computer readable medium.

Similarly, there is also proposed a computer-readable (storage) medium comprising instructions which, when executed by a computer or processing system, cause the computer or processing system to carry out (the steps of) any herein described method. There is also proposed computer-readable data carrier having stored thereon the computer program (product) previously described. There is also proposed a data carrier signal carrying the computer program (product) previously described.

The skilled person would be readily capable of adapting any herein described method to reflect embodiments of herein described apparatus, systems and/or processors, and vice versa. A similar understanding would be made by the skilled person with respect to a computer program (product).

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 illustrates a method according to an embodiment;
Fig. 2 illustrates a display;
Fig. 3 illustrates a user interface system; and
Fig. 4 illustrates a processing system.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a mechanism for generating a success indicator of a sales conversation based on notes taken by a sales representative during the sales conversation. The notes, written by the sale representative during the sales conversation, are processed using a predictive algorithm to generate the success indicator.

In the context of the present disclosure, a "success indicator" is data that represents or indicates a prediction that the outcome of a sales conversation, between a sales representative and a current/potential client, is a desired outcome (for the sales representative).

The present disclosure is based upon the realization that sales notes written by a sales representative provide useful information that can be used to predict the likely outcome of a sales conversation. In particular, it is recognized that note taking is a standard activity during a sales conversation, and provides meaningful information for predicting/estimating likely success of the sales conversation, that can avoid the need to perform complex voice recognition or emotion analysis of voice/video data of the sales conversation.

Embodiments of the present invention may be employed in any suitable sales environment, such as a call center.

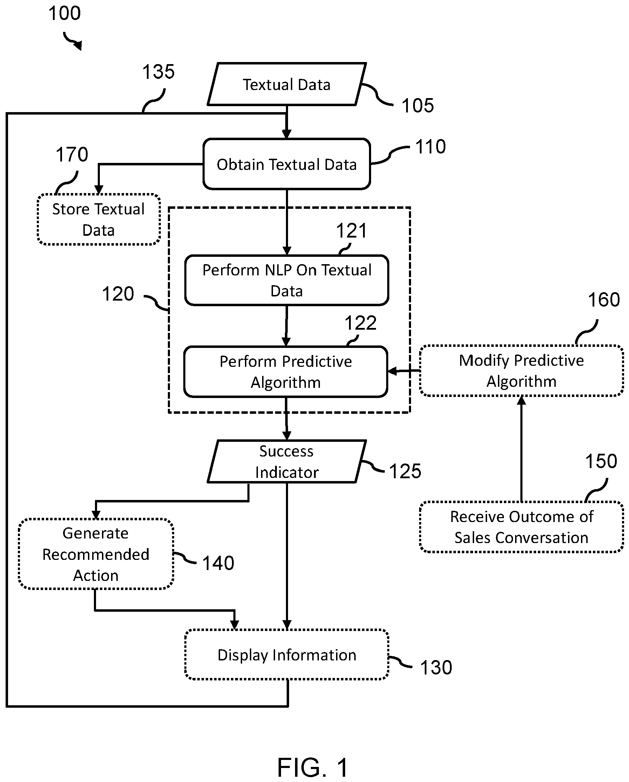

Fig. 1 illustrates a flowchart of a method 100 according to an embodiment of the invention. The method 100 may be carried out by a processing system, as later described.

The method 100 comprises a step 110 of obtaining textual data 105, the textual data comprising notes taken by a sales representative during a sales conversation. The sales conversation (of the notes) preferably includes at least an ongoing sales conversation, and may include a previous sales conversation.

This textual data may be received at an input interface of a processing system. The textual data may be provided by a user interface (e.g. from the sales representative interacting with the user interface) and/or from a memory that stores textual data input by the user, e.g. via the user interface.

The textual data is preferably specific to a particular (potential) client or customer (e.g. specific to the customer themselves or to a company that the customer represents or is employed by).

In some examples, if the (potential) client or customer of the sales conversation has already had contact with the sales representative and/or their company, step 110 may comprise obtaining existing textual data, including notes taken by a sales representative during a previous sales conversation. In these examples, step 110 may comprise obtaining an indicator of the identity of the (potential) customer or client, and obtaining textual data for the customer or client based on the indicator of the identity. This can be performed using a look-up table or the like. The indicator of the identity may include, for example, a name, an address, a phone number, an email address, a ZIP code or postcode, and/or a company name. Other examples for information suitable for contributing to an indicator of the identity will be apparent to the skilled person.

The method further comprises a process 120 of processing the textual data 105 obtained in step 110, using a predictive algorithm, to generate a success indicator 125.

As previously explained, the success indicator comprises data that represents or indicates a prediction that the outcome of a sales conversation, between a sales representative and a current/potential client, is a desired outcome. The desired outcome is typically a desired outcome for the sales representative.

The desired outcome may be successful sale of a product or service, successful retention of a client, successful upgrading of an existing service and so on. Various successful outcomes of a sales conversation (for the sales representative) will be apparent to the skilled person.

The success indicator may comprise binary, categorical or numerical data. As one example, the success indicator may be a binary indicator (e.g. "0" or "1") that indicates a prediction of whether or not the outcome will be the desired outcome. As another example, the success indicator may be a probability (a numeric indicator) that the outcome will be the desired outcome. The numeric indicator may be on the scale of 0 to 1, 0 to 10, 1 to 10, 0 to 100 or 1 to 100 (although other examples could be used). As yet another example, the success indicator may be a categorical indicator that indicates a categorical indication of likelihood that a certain outcome will be achieved (e.g. "Likely", "Unlikely", "Highly Likely", "Neither Likely nor Unlikely" and so on).

The process 120 may be performed by performing a first step 121 of processing the obtained textual data using one or more natural language processing (NLP) algorithms to generate an output

The output of the natural language processing algorithm(s) may include any suitable feature for being processed by a machine-learning method. For example, the output of the natural language process algorithm(s) may include the frequency and/or occurrence of key words, the emotion of the text (e.g. a positive emotion or a negative emotion, sometimes known as sentiment analysis), the presence of absence of certain information (e.g. client/customer specific information, such as address details or payment details) and so on.

The natural language processing algorithm may use one or more of any type of suitable natural language processing algorithm that employs techniques such as bag-of-words, tf-idf, or other known natural language processing techniques. The function of each natural language processing algorithm is to extract features from the textual data (i.e. the notes) which can be used as (part of) an input for a machine-learning algorithm.

In particular examples, a natural language processing algorithm may identify any responses of the client to one or more questions asked by the sales representative; and output data responsive to any identified recorded responses. The present disclosure recognizes that notes made in response to a question asked by the sales representative are particularly representative of the likely outcome of the call, as they provide a good indicator of whether the sales representatives tactic for achieving the desired outcome is working effectively, e.g. whether or not the (potential) client/customer is engaging with the sales representative.

As another example, a natural language processing algorithm may identify whether or not the textual data contains personal information about the (potential) client/customer, and optionally an amount of the same. It is recognized that the presence of information about the (potential) client/customer indicates that the sales conversation is progressing towards a desired outcome (e.g. selling of a product), as such information is typically needed to achieve a desired outcome, and is unlikely to be provided if the desired outcome will not be achieved.

As yet another example, a natural language processing algorithm may identify the presence and/or frequency of certain key words or phrases, e.g. "want", "purchase", "buy", "existing", "out-of-date", "does not want" and so on. The key words or phrases may be selected based on the desired outcome, and may act as semantic pointers towards whether or not the desired outcome is likely to be achieved.

For example, in the context of a sales conversation with a desired outcome of successfully selling a new product/service to a (potential) client/customer, a high frequency or presence of the phrase "does not want" may indicate that the desired outcome is unlikely to be achieved, whereas a high frequency or presence of the term "out-of-date" may indicate that the desired outcome is likely to be achieved (e.g. indicating that the (potential) clients existing product/service is not sufficient, and they are more likely to want to buy the new product/service).

The natural language processing algorithm(s) may employ one or more classifiers, machine-learning algorithms or other textual analysis mechanisms.

Some further suitable natural language processing techniques for processing textual data are disclosed in the International Patent Applications having publication numbers WO 2019/115200 A1, WO 2015/091223 A1, WO 2018/141942 A1 and WO 2019/115236 A1, one or more of which may be employed in the present invention. However, other suitable approaches will be apparent to the skilled person.

Thus, the natural language processing algorithm(s) may include any suitable textual analysis algorithm that generates suitable features for input to a machine-learning algorithm.

In some examples, more than one different natural language processing algorithm is used to generate features for input to the machine-learning algorithm. For instance, a first natural language processing algorithm could be used to generate a first set of one or more features (e.g. representing the frequency of key words in the textual data) and a second natural language processing algorithm could be used to generate a second set of one or more features (e.g. representing the emotion of the text). This approach increases the availability of features for input to the machine-learning algorithm and facilitates the use of more specific natural language processing algorithms (e.g. more accurately trained to perform a specific task, rather than attempting to perform a wide variety of tasks).

The process 120 also comprises a second step 122 of processing the output of the natural language processing algorithm using a machine-learning algorithm to generate the success indicator.

The machine-learning algorithm may, for example, be a classifier. The classifier may produce an output that gives a likelihood that the output of the natural language processing algorithm belongs to a certain classification, (e.g. successful/unsuccessful call outcome or to distinguish between multiple different types of call outcome, such as successful, unsuccessful and requires further conversations). Other suitable machine-learning algorithms would be apparent to the skilled person, e.g. to produce binary outputs or categorical outputs.

The machine-learning algorithm may be specific to the particular desired outcome. Thus, different machine-learning algorithms may be used for different desired outcomes (e.g. depending upon the type of sales conversation). The type of sales conversation may be indicated by the sales representative (e.g. via an input at a user interface) or inferred from the textual data.

A machine-learning algorithm is any self-training algorithm that processes input data in order to produce or predict output data. Here, the input data comprises an output of a natural language processing algorithm and the output data comprises a success indicator.

Suitable machine-learning algorithms for being employed in the present invention will be apparent to the skilled person. Examples of suitable machine-learning algorithms include decision tree algorithms and artificial neural networks. Other machine-learning algorithms such as logistic regression, support vector machines or Naive Bayesian models are suitable alternatives.

The structure of an artificial neural network (or, simply, neural network) is inspired by the human brain. Neural networks are comprised of layers, each layer comprising a plurality of neurons. Each neuron comprises a mathematical operation. In particular, each neuron may comprise a different weighted combination of a single type of transformation (e.g. the same type of transformation, sigmoid etc. but with different weightings). In the process of processing input data, the mathematical operation of each neuron is performed on the input data to produce a numerical output, and the outputs of each layer in the neural network are fed into the next layer sequentially. The final layer provides the output.

Methods of training a machine-learning algorithm are well known. Typically, such methods comprise obtaining a ("ground truth") training dataset, comprising training input data entries and corresponding training output data entries ("ground truth" data). An initialized machine-learning algorithm is applied to each input data entry to generate predicted output data entries. An error between the predicted output data entries and corresponding training output data entries is used to modify the machine-learning algorithm. This process can be repeated until the error converges, and the predicted output data entries are sufficiently similar (e.g. ±1%) to the training output data entries. This is commonly known as a supervised learning technique.

For example, where the machine-learning algorithm is formed from a neural network, (weightings of) the mathematical operation of each neuron may be modified until the error converges. Known methods of modifying a neural network include gradient descent, backpropagation algorithms and so on.

The training input data entries correspond to example outputs of a natural language processing algorithm. The training output data entries correspond to success indicators.

In other examples, process 120 may, rather than employing both an NLP algorithm and a predictive algorithm, simply use a predictive algorithm (such as a machine-learning method) to process the textual data to generate the success indicator. This approach is less preferred, as NLP algorithms are capable of extracting more relevant features (such as sentiments or frequency of certain key words) that improve the accuracy of generating the success indicator.

The method 100 may also comprise a step 130 of displaying, at a user interface, the generated success indicator. This allows a sales representative to obtain an understanding, during the sales conversation/call, of the likely outcome of the sales conversation based on their notes, and reduces the likelihood that the sales representative will pursue an unprofitable sales conversation or will fail to pursue a likely profitable sales conversation. This can improve the efficiency of the sales representative in their role/task.

A processing system (carrying out the method 100) may interact with the user interface to perform step 130.

In some examples, step 130 can be omitted. Other approaches for providing a user with information about the success indicator could be used instead, e.g. providing audible or haptic feedback (such as a vibration) to a user. For instance, if a likelihood of success drops below some predetermined value, an audible/haptic alert may be generated to encourage the sales representative to terminate the sales conversation.

Of course, a combination of audio, haptic and/or visual representations (i.e. user-perceptible outputs) of the success indicator could be provided to the sales representative. In some examples, the representation (user-perceptible output) of the success indicator is only provided to the user if some predetermined criterion/criteria is/are met, such as a value of a numeric success indicator falling below or rising above some predetermined value, or falling within a particular range of predetermined values. This approach could be used to alert the user to changes in the generated success indicator. This thereby provides an alert-based approach to providing the user with information about the success indicator.

In some examples, step 130 is performed (i.e. a visual representation of the success information is always displayed) and the above-described alert-based approach could supplement the displayed success information.

In some examples, the method 100 further comprises a step 140 of processing the success indicator to generate a recommended action for the sales representative. The recommended action may be displayed to a user at the user interface as part of step 130, or provided via an alternative user-perceptible output.

By way of example, if the success indicator is a numeric indicator, a first recommended action (e.g. "end the conversation" or "drop the call") may be provided if the success indicator falls below a first predetermined value (e.g. 50% of the maximum value of the numeric indicator). As another example, if the success indicator rises above a second predetermined value (e.g. 75% of the maximum value of the numeric indicator), a second recommended action (e.g. "keep the conversation going" or "stay on the call") may be provided. The first predetermined value may be the same or different to the second predetermined value. If the first and second predetermined values are different, a third recommended action (e.g. "consider ending the conversation" or "consider dropping the call") may be provided if the success indicator falls between the first and second predetermined values.

The previously described steps 110-130 may be iteratively repeated, e.g. as the sales representative updates (adds to, removes or edits) the notes (i.e. the textual data 105). The repetition is indicated by arrow 135. This ensures that a most up-to-date version of the success indicator is provided to the sales representative.

Steps 110-130 may take place during a sales conversation. Of course, steps 110-130 may otherwise take place during a later analysis or training phase (e.g. to assess the outcome of the sales conversation or to train users on how to perform a sales conversation).

In some examples, the method 100 further comprises a step 150 of receiving an input, from the sales representative, indicating an actual outcome of the sales conversation. The method may comprise a step 160 of modifying the predictive algorithm based on the actual outcome of the sales conversation and the textual data of the sales conversation.

Thus, the predictive algorithm (e.g. the machine-learning algorithm) can be updated based on the true outcome of the call. This can result in subsequent analysis using the predictive algorithm being more accurate.

The steps 150 and 160 do not need to be performed immediately in sequence. Rather, the actual outcome of the sale algorithm may be stored (along with the textual data of the notes), and later processed (e.g. with other examples of actual outcomes and corresponding textual data) to update the predictive algorithm. Thus, the received outcome and textual data may act as "ground truth" data for training the predictive algorithm.

Step 160 may comprise retraining the predictive algorithm using the actual outcome of the sales conversation and the textual data of the sales conversation. This approach may be particularly advantageous if the predictive algorithm includes a machine-learning method.

Of course, step 160 may comprise updating the natural language processing algorithm and/or the machine learning algorithm (if used).

In some examples, the method 100 further comprises a step 170 of storing the textual data obtained in step 110, e.g. in a database. This can allow a record of the calls for a specific (potential) client and/or customer to be prepared and stored. As previously explained, stored notes may be obtained in a subsequent iteration of method 100 for the same (potential) client or customer, e.g. during a follow-up conversation.

The step 170 of storing the textual data may comprise storing the textual data in a memory or storage unit, preferably together with information identifying the (potential) customer/client and/or information on the outcome of the sales conversation.

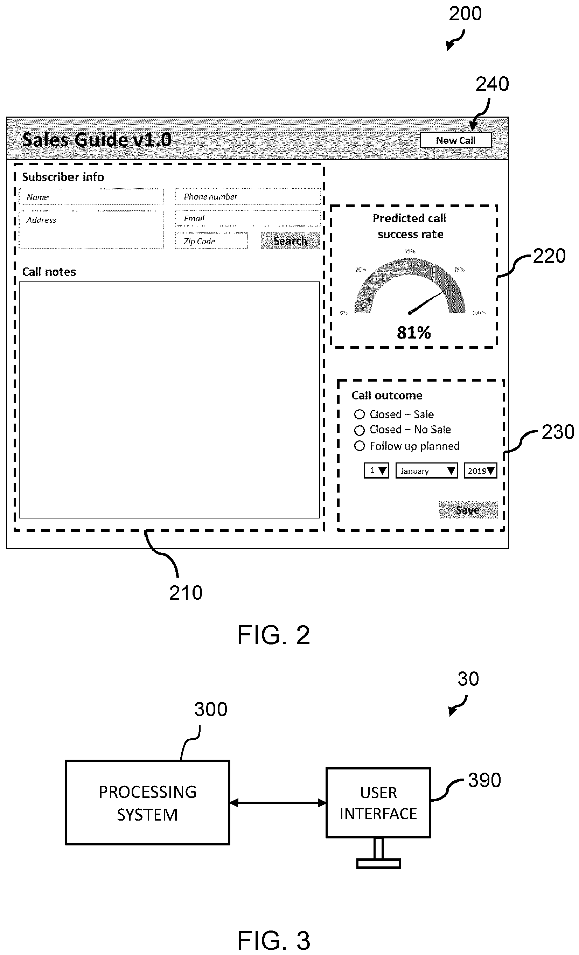

Fig. 2 illustrates an example of a (graphical) display 200 for a user interface (e.g. a dashboard) for use with the present invention. The display is a visual representation of information provided by the user interface.

The display 200 includes a first portion 210 for displaying textual data, comprising notes taken by a sales representative during the sales conversation. The first portion 200 of the display may respond to a user input to update the display textual data as the user updates or edits the textual data. In other words, the user may interact with the first portion, e.g. using a user input device, to modify (add to, edit or delete) textual data displayed in the first portion.

The first portion may be subdivided into different sub-portions for displaying and receiving the textual data. For example, some sub-portions may be dedicated for displaying and receiving textual data comprising identity information of the (potential) client/customer. Another sub-portion may be dedicated for displaying and receiving miscellaneous notes.

The display 200 also includes a second portion 220. The second portion provides a visual representation of the success indicator. In the illustrated example, the success indicator is represented in both numeric 221 and graphical 222 form. The graphical representation of the success indicator further provides an indication of a categorical likelihood of success (e.g. "red", "orange" or "green" - illustrated using different shades). The categorical likelihood of success is based upon the value of the numeric indicator, e.g. using an analogue gauge-like representation.

The display 200 may also include a third portion 230. The user may interact with the third portion 230 to indicate an outcome of the sales conversation. The third portion may therefore comprise one or more toggles, buttons or other graphical interface elements for receiving information on the outcome of the sales conversation. This information can be used, as previously described, to update a predictive algorithm for the predicting the outcome of the call.

The display 200 may also include a fourth portion 240, containing a graphical interface element. A sales representative may interact with the graphical interface element in the fourth portion to begin the process again, e.g. with anew customer/client.

Preferably, in the herein described embodiments, the sales conversation is an audible sales conversation (e.g. rather than a text-based sales conversation). The advantage of the present invention is particularly pronounced when the sales conversation does not take place using any written communication, besides the notes taken by the sales representative.

Fig. 3 illustrates a user interface system 30 according to an embodiment.

The user interface comprises a processing system 300, which it itself an embodiment of the invention. The user interface system 30 further comprises a user interface 390.

The processing system 300 is configured to obtain, at an input interface, textual data, the textual data comprising notes taken by a sales representative during the sales conversation; and process the obtained textual data using a predictive algorithm to generate the success indicator.

The textual data may be obtained from an external device, such as a memory or from the user interface 390.

The processing system 300 may be configured to carry out any previously described method, such as the method described with reference to Fig. 1.

The user interface 390 is configured to display a visual representation of the success indicator. The user interface may further display a visual representation of the textual data and/or other information. For instance, the user interface may display one or more of the portions of the display 200 described with reference to Fig. 2.

The user interface 390 may further comprise one or more user input devices (not shown) that allow a user (i.e. the sales representative) to input information, for example, to update, edit, delete or supplement existing textual data and/or to provide an indicator of the outcome of the sales conversation.

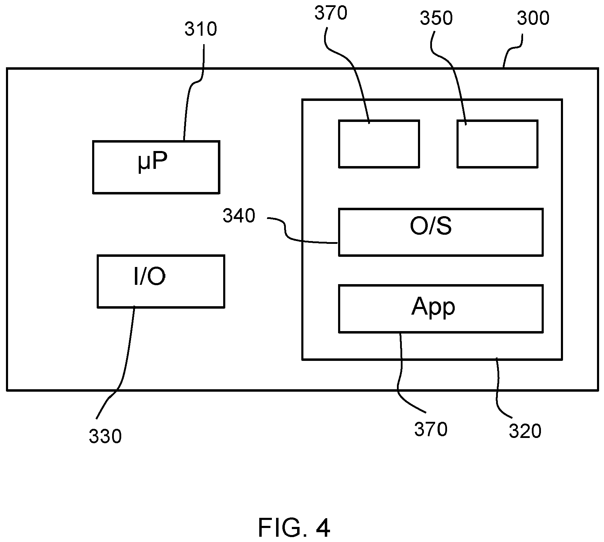

Fig. 4 illustrates an example of a processing system 300 within which one or more parts of an embodiment may be employed. Various operations discussed above may utilize the capabilities of the processing system 300. For example, one or more parts of a system for processing textual data may be incorporated in any element, module, application, and/or component discussed herein. In this regard, it is to be understood that system functional blocks can run on a single processing system or may be distributed over several processing systems and locations (e.g. connected via internet).

The processing system 300 includes, but is not limited to, PCs, workstations, laptops, PDAs, palm devices, servers, storages, and the like. Generally, in terms of hardware architecture, the processing system 300 may include one or more processors 310, memory 320, and one or more I/O devices 370 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 310 is a hardware device for executing software that can be stored in the memory 320. The processor 310 can be virtually any custom made or commercially available processor, a central processing unit (CPU), a digital signal processor (DSP), or an auxiliary processor among several processors associated with the processing system 300, and the processor 310 may be a semiconductor based microprocessor (in the form of a microchip) or a microprocessor.

The memory 320 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 320 may incorporate electronic, magnetic, optical, and/or other types of storage media. Note that the memory 320 can have a distributed architecture, where various components are situated remote from one another, but can be accessed by the processor 310.

The software in the memory 320 may include one or more separate programs, each of which comprises an ordered listing of executable instructions for implementing logical functions. The software in the memory 320 includes a suitable operating system (O/S) 350, compiler 340, source code 330, and one or more applications 360 in accordance with exemplary embodiments. As illustrated, the application 360 comprises numerous functional components for implementing the features and operations of the exemplary embodiments. The application 360 of the processing system 300 may represent various applications, computational units, logic, functional units, processes, operations, virtual entities, and/or modules in accordance with exemplary embodiments, but the application 360 is not meant to be a limitation.

The operating system 350 controls the execution of other computer programs, and provides scheduling, input-output control, file and data management, memory management, and communication control and related services. It is contemplated by the inventors that the application 360 for implementing exemplary embodiments may be applicable on all commercially available operating systems.

Application 360 may be a source program, executable program (object code), script, or any other entity comprising a set of instructions to be performed. When a source program, then the program is usually translated via a compiler (such as the compiler 340), assembler, interpreter, or the like, which may or may not be included within the memory 320, so as to operate properly in connection with the O/S 350. Furthermore, the application 360 can be written as an object oriented programming language, which has classes of data and methods, or a procedure programming language, which has routines, subroutines, and/or functions, for example but not limited to, C, C++, C#, Pascal, BASIC, API calls, HTML, XHTML, XML, ASP scripts, JavaScript, FORTRAN, COBOL, Perl, Java, ADA, .NET, and the like.

The I/O devices 370 may include input devices such as, for example but not limited to, a mouse, keyboard, scanner, microphone, camera, etc. Furthermore, the I/O devices 370 may also include output devices, for example but not limited to a printer, display, etc. Finally, the I/O devices 370 may further include devices that communicate both inputs and outputs, for instance but not limited to, a NIC or modulator/demodulator (for accessing remote devices, other files, devices, systems, or a network), a radio frequency (RF) or other transceiver, a telephonic interface, a bridge, a router, etc. The I/O devices 370 also include components for communicating over various networks, such as the Internet or intranet.

In particular examples, the I/O devices 370 may be configured to obtain user input for creating, editing or deleting textual data representing notes taken by the sales representative.

If the processing system 300 is a PC, workstation, intelligent device or the like, the software in the memory 320 may further include a basic input output system (BIOS) (omitted for simplicity). The BIOS is a set of essential software routines that initialize and test hardware at startup, start the O/S 350, and support the transfer of data among the hardware devices. The BIOS is stored in some type of read-only-memory, such as ROM, PROM, EPROM, EEPROM or the like, so that the BIOS can be executed when the processing system 300 is activated.

When the processing system 300 is in operation, the processor 310 is configured to execute software stored within the memory 320, to communicate data to and from the memory 320, and to generally control operations of the processing system 300 pursuant to the software. The application 360 and the O/S 350 are read, in whole or in part, by the processor 310, perhaps buffered within the processor 310, and then executed.

When the application 360 is implemented in software it should be noted that the application 360 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

The application 360 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium.

Preferably, the sales conversation is an audible sales conversation (e.g. rather than a text-based sales conversation). The advantage of the present invention is particularly pronounced when the sales conversation does not take place using any written communication, besides the notes taken by the sales representative.

The present invention may be a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

## Claims

1. A computer-implemented method (100) for generating a success indicator (125) representing a prediction that the outcome of a sales conversation, between a sales representative and a current/potential client, is a desired outcome, the computer-implemented method comprising:
obtaining (110) textual data (105), the textual data comprising notes taken by a sales representative during a sales conversation; and
processing (120) the obtained textual data using a predictive algorithm to generate the success indicator (125).

2. The computer-implemented method (100) of claim 1, wherein the success indicator (125) comprises a predicted probability that the outcome of the sales conversation is the desired outcome.

3. The computer-implemented method (100) of claim 1, wherein the step (120) of processing the obtained textual data comprises:
processing (121) the obtained textual data using a natural language processing algorithm; and
processing (122) the output of the natural language processing algorithm using a machine-learning algorithm to generate the success indicator.

4. The computer-implemented method (100) of claim 3, wherein the step (121) of processing the obtained textual data using a natural language processing algorithm comprises:
using the natural language processing algorithm to identify any responses of the client to one or more questions asked by the sales representative; and
outputting data responsive to any identified recorded responses.

5. The computer-implemented method (100) of claim 1, further comprising displaying (130), at a user interface (390), a visual representation of the success indicator.

6. The computer-implemented method (100) of claim 1, further comprising:
receiving (160) an input, from the sales representative, indicating an actual outcome of the sales conversation; and
modifying (170) the predictive algorithm based on the actual outcome of the sales conversation and the textual data of the sales conversation.

7. The computer-implemented method (100) of claim 6, wherein the step (170) of modifying the predictive algorithm comprises retraining the predictive algorithm using the actual outcome of the sales conversation and the textual data of the sales conversation.

8. The computer-implemented method (100) of claim 1, wherein the textual data (105) is obtained from an input interface configured to receive textual input from the sales representative.

9. The computer-implemented method (100) of claim 1, wherein the computer-implemented method is iteratively repeated to thereby generate and update the success indicator.

10. The computer-implemented method (100) of claim 1, wherein the textual data comprises any identifying information of the client noted by the sales representative during the sales conversation.

11. The computer-implemented method (100) of claim 1, wherein the desired outcome is, for a potential or current client, a sale of a product or service to the potential or current client.

12. The computer-implemented method (100) of claim 1, wherein the desired outcome is, for a current client, the retention of the client as a customer for the sales representative.

13. A computer program product comprising computer program code means which, when executed on a computing device having a processing system, cause the processing system to perform all of the steps of the method according to claim 1.

14. A processing system (300) for generating a success indicator (125) representing a prediction that the outcome of a sales conversation, between a sales representative and a current/potential client, is a desired outcome, the processing system being configured to:
obtain (110), at an input interface, textual data (110), the textual data comprising notes taken by a sales representative during the sales conversation; and
process (120) the obtained textual data using a predictive algorithm to generate the success indicator.

15. A user interface system (30) comprising:
the processing system (300) of claim 14; and
a user interface (390) configured to display (130) a visual representation of the success indicator.
